(19) **Europäisches Patentamt / European Patent Office / Office européen des brevets**

(11) **EP 2 737 452 B1**

(12) **FASCICULE DE BREVET EUROPEEN**

(45) Date de publication et mention de la délivrance du brevet:
**10.04.2019 Bulletin 2019/15**

(21) Numéro de dépôt: **12740972.0**

(22) Date de dépôt: **27.07.2012**

(51) Int Cl.:
**H04N 19/132** *(2014.01)* **H04N 19/182** *(2014.01)*
**H04N 19/17** *(2014.01)* **H04N 19/20** *(2014.01)*
**H04N 19/90** *(2014.01)* **H04N 19/59** *(2014.01)*

(86) Numéro de dépôt international:
**PCT/EP2012/064835**

(87) Numéro de publication internationale:
**WO 2013/014290 (31.01.2013 Gazette 2013/05)**

(54) **PROCÉDÉ DE CODAGE D'UNE IMAGE APRÈS REDIMENSIONNEMENT PAR SUPPRESSION DE PIXELS et procédé de transmission d'image entre une entité émettrice et une entité réceptrice**

VERFAHREN ZUR KODIERUNG EINES BILDES NACH EINER GRÖSSENÄNDERUNG MITTELS PIXELENTFERNUNG UND BILDÜBERTRAGUNGSVERFAHREN ZWISCHEN EINEM SENDER UND EINEM EMPFÄNGER

METHOD FOR ENCODING AN IMAGE AFTER RESIZING BY DELETING PIXELS AND IMAGE TRANSMISSION METHOD BETWEEN A TRANSMITTER AND RECEIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.07.2011 FR 1102379**

(43) Date de publication de la demande:
**04.06.2014 Bulletin 2014/23**

(73) Titulaire: **THALES**
**92200 Neuilly-sur-Seine (FR)**

(72) Inventeurs:
- **DECOMBAS, Marc**
  **F-92704 Colombes Cedex (FR)**
- **RENAN, Erwann**
  **F-92704 Colombes Cedex (FR)**
- **CAPMAN, François**
  **F-92704 Colombes Cedex (FR)**
- **DUFAUX, Frédéric**
  **F-92320 Chatillon (FR)**
- **PESQUET-POPESCU, Béatrice**
  **F-77700 Bailly Romainvilliers (FR)**

(74) Mandataire: **Lavoix**
**2, place d'Estienne d'Orves**
**75441 Paris Cedex 09 (FR)**

(56) Documents cités:
**EP-A2- 2 219 153**

- **DÉCOMBAS M ET AL: "Seam carving for semantic video coding", PROCEEDINGS OF SPIE, SPIE, US, vol. 8135, 22 août 2011 (2011-08-22), pages 81350F-1-81350F-12, XP009157356, ISSN: 0277-786X, DOI: 10.1117/12.895317 [extrait le 2011-09-23]**
- **NGUYEN THI NHAT ANH ET AL: "Seam carving extension: a compression perspective", PROCEEDING MM '09 PROCEEDINGS OF THE 17TH ACM INTERNATIONAL CONFERENCE ON MULTIMEDIA,, 1 octobre 2009 (2009-10-01), pages 825-828, XP009157333,**
- **YUICHI TANAKA ET AL: "Image coding using concentration and dilution based on seam carving with hierarchical search", ACOUSTICS SPEECH AND SIGNAL PROCESSING (ICASSP), 2010 IEEE INTERNATIONAL CONFERENCE ON, IEEE, PISCATAWAY, NJ, USA, 14 mars 2010 (2010-03-14), pages 1322-1325, XP031697377, ISBN: 978-1-4244-4295-9**

- YUICHI TANAKA ET AL: "Improved image concentration for artifact-free image dilution and its application to image coding", 2010 17TH IEEE INTERNATIONAL CONFERENCE ON IMAGE PROCESSING : (ICIP 2010) ; HONG KONG, 26 - 29 SEPTEMBER 2010, IEEE, PISCATAWAY, NJ, USA, 26 septembre 2010 (2010-09-26), pages 1225-1228, XP031813856, ISBN: 978-1-4244-7992-4
- TAO WANG ET AL: "Cartesian resizing of image and video for data compression", TENCON 2010 - 2010 IEEE REGION 10 CONFERENCE, IEEE, PISCATAWAY, NJ, USA, 21 novembre 2010 (2010-11-21), pages 1651-1656, XP031898521, DOI: 10.1109/TENCON.2010.5686771 ISBN: 978-1-4244-6889-8
- MICHAEL RUBINSTEIN ET AL: "Improved seam carving for video retargeting", INTERNET CITATION, 1 janvier 2008 (2008-01-01), XP007912960, Extrait de l'Internet: URL:http://www.shaiavidan.org/papers/vidretLowRes.pdf [extrait le 2010-05-05]
- YUICHI TANAKA ET AL: "Seam carving with rate-dependent seam path information", ACOUSTICS, SPEECH AND SIGNAL PROCESSING (ICASSP), 2011 IEEE INTERNATIONAL CONFERENCE ON, IEEE, 22 mai 2011 (2011-05-22), pages 1449-1452, XP032001097, DOI: 10.1109/ICASSP.2011.5946765 ISBN: 978-1-4577-0538-0
- AVIDAN S ET AL: "Seam carving for content-aware image resizing", ACM TRANSACTIONS ON GRAPHICS: TOG, ACM, US, vol. 26, no. 3, 1 juillet 2007 (2007-07-01), pages 10-1-10-9, XP007904203, ISSN: 0730-0301, DOI: 10.1145/1276377.1276390
- ESA RAHTU ET AL: "A Simple and efficient saliency detector for background subtraction", 2009 IEEE 12TH INTERNATIONAL CONFERENCE ON COMPUTER VISION WORKSHOPS, ICCV WORKSHOPS : KYOTO, JAPAN, 27 SEPTEMBER - 4 OCTOBER 2009, INSTITUTE OF ELECTRICAL AND ELECTRONICS ENGINEERS, PISCATAWAY, NJ, 27 septembre 2009 (2009-09-27), pages 1137-1144, XP031664590, ISBN: 978-1-4244-4442-7
- DAW-SEN HWANG ET AL: "Content-aware image resizing using perceptual seam carving with human attention model", MULTIMEDIA AND EXPO, 2008 IEEE INTERNATIONAL CONFERENCE ON, IEEE, PISCATAWAY, NJ, USA, 23 juin 2008 (2008-06-23), pages 1029-1032, XP031312900, ISBN: 978-1-4244-2570-9
- DUAN-YU CHEN ET AL: "Content-Aware Video Seam Carving Based on Bag of Visual Cubes", INTELLIGENT INFORMATION HIDING AND MULTIMEDIA SIGNAL PROCESSING (IIH-MSP), 2010 SIXTH INTERNATIONAL CONFERENCE ON, IEEE, PISCATAWAY, NJ, USA, 15 octobre 2010 (2010-10-15), pages 615-618, XP031801952, ISBN: 978-1-4244-8378-5
- CHEN-KUO CHIANG ET AL: "Fast JND-Based Video Carving With GPU Acceleration for Real-Time Video Retargeting", IEEE TRANSACTIONS ON CIRCUITS AND SYSTEMS FOR VIDEO TECHNOLOGY, IEEE SERVICE CENTER, PISCATAWAY, NJ, US, vol. 19, no. 11, 1 novembre 2009 (2009-11-01), pages 1588-1597, XP011275988, ISSN: 1051-8215, DOI: 10.1109/TCSVT.2009.2031462
- RADHAKRISHNA ACHANTA ET AL: "Saliency detection for content-aware image resizing", IMAGE PROCESSING (ICIP), 2009 16TH IEEE INTERNATIONAL CONFERENCE ON, IEEE, PISCATAWAY, NJ, USA, 7 novembre 2009 (2009-11-07), pages 1005-1008, XP031628479, ISBN: 978-1-4244-5653-6
- MICHAEL FRANKOVICH ET AL: "Enhanced Seam Carving via Integration of Energy Gradient Functionals", IEEE SIGNAL PROCESSING LETTERS, IEEE SERVICE CENTER, PISCATAWAY, NJ, US, vol. 18, no. 6, 1 juin 2011 (2011-06-01), pages 375-378, XP011355003, ISSN: 1070-9908, DOI: 10.1109/LSP.2011.2140396

**Description**

La présente invention concerne un procédé de codage d'une image numérique ou d'une séquence d'images numériques comportant une étape de :

a. suppression de chemins entre deux bords opposés d'une image par un algorithme de redimensionnement par suppression de pixels pour définir une image réduite ;
b. modélisation des chemins supprimés pour transmission avec l'image réduite en vue de l'interpolation d'une image étendue.

Pour la transmission avec un très bas débit d'images fixes ou d'une succession d'images dans le cadre de la vidéo, il est connu de mettre en oeuvre, coté entité émettrice, une méthode de redimensionnement de chaque image avant compression par suppression de certains éléments d'image. En particulier, les éléments supprimés appelés « seam » en anglais sont des chemins de points adjacents s'étendant d'un bord à l'autre de chaque image. L'image compressée et transmise est ainsi une image réduite.

Coté entité réceptrice, une image étendue est reconstituée à partir de l'image réduite décompressée en insérant des chemins de points suivant un algorithme de reconstitution de l'image.

Cette technique est connue sous le nom anglais de « seam carving » ou « redimensionnement par suppression de pixels» en français.

Pour permettre une reconstitution convenable de l'image étendue à partir de l'image réduite, il est nécessaire de transmettre une description des chemins supprimés. Cette description contient des informations sur le nombre, la nature et la position des chemins supprimés. Cette description doit être aussi peu couteuse en bande passante que possible mais elle doit être suffisante pour permettre une reconstitution de qualité de l'image et notamment permettre une interprétation intelligible de l'image par l'homme sans déformation importante des éléments d'intérêt de l'image.

Anh et al (Anh, N., Yang, W. and Cai, J.; "Seam carving extension: a compression perspective", in Proc. of the 17th ACM int. conf. on Multimedia, (2009)) introduisent une compression multi-dimensions tenant compte du contenu basé sur le « seam carving ».

Plus précisément, le codec proposé encode une image dans un « bitstream » progressif et qui tient compte du contenu. Il encode aussi la position et la valeur des chemins. Il suppose que la résolution spatiale horizontale et verticale de l'image est de la forme 2N pixels. Pour la position des chemins, il encode la coordonnée absolue x du premier pixel de la première colonne et la différence entre le premier pixel de la colonne précédente et le premier pixel de la colonne courante. Ils utilisent un codeur arithmétique de $(2^{N+1}-1)$ symboles.

Pour les autres points, il encode la différence du pixel courant avec le pixel précédent du même chemin avec un codeur arithmétique de 3 symboles. Pour la couleur, il utilise le même concept en remplaçant la coordonnée absolue x par la valeur de R, G, B. Pour tous ces points, il a besoin d'un codeur arithmétique de $2^9-1$ symboles. Cette représentation permet de décoder l'image à n'importe quelle résolution. Pour calculer le « seam carving », les auteurs utilisent une fonction d'énergie basée sur une carte de saillance multipliée par un gradient sur la luminance. Pour encoder la position des chemins, ils utilisent donc un codeur arithmétique adaptatif et pour encoder la valeur des chemins, ils font de la quantification avec un dictionnaire prédéfini. Pour contrôler le processus de réduction, ils définissent la boîte rectangulaire englobant la région d'intérêt de dimensions w0 x h0. La région d'intérêt est définie à partir d'une carte de saillance telle définie dans l'article et ils arrêtent la réduction lorsque l'image atteint une dimension de (1.5*w0) x (1.5*h0) Tanaka et al (Tanaka, Y., Hasegawa, M. and Kato, S., "Image coding using concentration and dilution based on seam carving with hierarchical search", in Proc. IEEE Int. Conf. on Acoustics Speech and Signal Processing, (2010)) proposent un schéma de codage d'image qui intègre le « seam carving ». Ils transmettent une image réduite par « seam carving » avec des informations sur la position des chemins. Comme les informations sur les chemins sont très importantes, ils ne transmettent pas la valeur des chemins (l'information de couleur) et quantifient leurs positions. La position des chemins est approximée sous la forme de piliers de longueur N, afin que le coût d'un chemin soit de $(\log_2(3))/N$ bpp. Pour définir la longueur d'un pilier, ils utilisent une approche haut-bas sur une fonction d'énergie cumulée modifiée (combinaison avec un multiplicateur de Lagrange de la « forward energy « et du coût des chemins). Le critère d'arrêt est basé sur l'énergie cumulative : si un chemin a un cout cumulatif supérieur à un certain seuil, le processus de réduction s'arrête

Wang et al. (Wang, T. and Urahama, K., "Cartesian resizing of image and video for data compression", TENCON 2010 - 2010 IEEE Region 10 Conference, 1651 -1656 (2010)) simplifient le principe du « seam carving » en autorisant uniquement la suppression de lignes droites (horizontale ou verticale) et combinent le redimensionnement du nombre d'image avec le redimensionnement spatial. Leur fonction d'énergie est le gradient calculé uniquement dans le sens du « seam carving ». Lorsque des chemins sont trop proches les uns des autres, il y a des distorsions visuelles. Ils utilisent une fonction de diffusion afin d'éviter que les chemins soient trop proches les uns des autres.

Tanaka 2 et al (Tanaka, Y., Hasegawa, M. and Kato, S., "Image coding using concentration and dilution based on seam carving with hierarchical search", in Proc. IEEE Int. Conf. on Acoustics Speech and Signal Processing, (2010)) améliorent Tanaka et al. pour limiter la quantité d'artefacts apparaissant lors de la phase d'interpolation basé sur l'idée que les chemins doivent éviter les régions texturées et les frontières des objets. Si les chemins passent par ces régions ou sont trop proches les uns des autres, des artefacts apparaissent lors de l'interpolation linéaire. Les chemins passeront à travers des régions uniformes, même si celles-ci sont des régions importantes de l'image.

Dans Tanaka 3 et al. (Tanaka, Y., Hasegawa, M. and Kato, S., "Image concentration and dilution for video coding", IIEEJ Image Electronics and Visual Computing Workshop - IEVC2010, (2010)), les auteurs appliquent la méthode de Tanaka et al. pour faire de la réduction vidéo basée sur une approche « graphcut » de Rubinstein et al. (Rubinstein, M., Shamir, A. and Avidan, S. "Improved seam carving for video retargeting", ACM Transactions on Graphics, (2008)). Ils suppriment le même chemin pour toutes les images et autorisent une connexité de 8 avec l'image suivante et précédente pour éviter des artefacts de transition entre les images. Pour calculer le chemin pour l'image courante, ils utilisent toutes les images du groupe d'images ou GOP. Pour faire l'évaluation, ils utilisent seulement un paramètre de quantification (QP) pour toutes les images de deux séquences tests.

Tanaka 4 et al. (Tanaka, Y., Hasegawa, M. and Kato, S.,"Seam carving with rate-dependent seam path information", in Proc. of the IEEE Int. Conf. on Acoustics Speech and Signal Processing (ICASSP), (2011)) proposent d'utiliser une approximation linéaire par morceaux pour définir le chemin optimal. La nouveauté est que les morceaux de chemins peuvent avoir des directions et des longueurs différentes. En général dans ces travaux, ils suppriment peu de chemins pour éviter les problèmes de synthèse, mais assez pour avoir un gain sur l'efficacité en compression.

EP 2.219.153 décrit un procédé de « seam carving » comportant des étapes de regroupement des chemins supprimés pour la création d'images de taille réduite. Ce document ne traite pas de la reconstitution de l'image initiale.

De manière générale, l'approche traditionnelle pour reconstituer une image par « seam carving » ou « redimensionnement par suppression de pixels» est d'appliquer le même algorithme que pour la réduction mais au lieu de supprimer les chemins, ceux-ci sont insérés.

Le principal problème est qu'il n'y a pas de moyen pour assurer que les chemins réinsérés soient à la même position que les chemins supprimés. A l'opposé, le coût d'encodage pour transmettre chaque chemin est réellement trop important en comparaison au gain provenant de la réduction de la taille de l'image. C'est pour cela que les travaux décrits ci-dessus ont été réalisés.

En conséquence, les approches de redimensionnement connues sans dégradation des régions d'intérêts conduisent à :

Soit un surcout d'encodage.

Soit la perte d'information de positionnement relatif des objets d'intérêts.

Soit un redimensionnement faible

L'invention a pour but de proposer une méthode permettant la transmission d'une image réduite avec une description des chemins supprimés qui soit peu couteuse en bande passante, tout en permettant la reconstitution d'une image étendue de qualité conservant notamment les régions d'intérêt permettant une bonne interprétation par un être humain, tout en prenant en compte l'aspect temporel dans le cas d'une séquence d'images. A cet effet, l'invention a pour objet un procédé de codage de type précité, selon la revendication 1.

Suivant des modes particuliers de réalisation, le procédé comporte l'une ou plusieurs des caractéristiques suivantes :

- ladite description des faisceaux comporte, pour seulement certaines lignes sélectionnées de l'image, une information sur la répartition des chemins supprimés ;
- l'information sur la répartition des chemins supprimés comporte la position de passage des chemins supprimés sur les lignes sélectionnées ;
- les lignes sélectionnées sont prises au moins chacune dans des zones équi-réparties de l'image selon la direction des chemins supprimés ;
- les lignes sélectionnées sont prises au moins chacune dans des zones réparties définies dans l'image en fonction du contenu de l'image ;
- pour une zone donnée comportant plusieurs lignes successives, une ligne sélectionnée est choisie pour chaque faisceau comme étant celle pour laquelle le faisceau présente la dispersion minimale ;
- pour une zone donnée comportant plusieurs lignes successives, une même ligne sélectionnée est choisie pour tous les faisceaux comme étant celle pour laquelle la somme des dispersions des faisceaux est minimale ;
- pour une zone donnée comportant plusieurs lignes successives, une même ligne sélectionnée est choisie pour tous les chemins comme étant celle comportant le plus grand nombre de chemins séparés les uns des autres de proche en proche d'une distance inférieure à un seuil prédéfini ;
- la création d'une description des faisceaux de chemins supprimés consiste en la définition de l'une des descriptions suivantes :
- la position de tous les chemins de chaque faisceau pour chaque ligne sélectionnée,
- la position du premier et du dernier chemins de chaque faisceau pour chaque ligne sélectionnée, ainsi que le nombre de chemins du faisceau,

- la position moyenne de chaque faisceau, correspondant à la moyenne des positions des chemins constituant le faisceau sur chaque ligne sélectionnée, ainsi que le nombre de chemins du faisceau, ou
- la position du premier chemin de chaque faisceau pour chaque ligne sélectionnée ainsi que le nombre de chemins de chaque faisceau pour chaque ligne sélectionnée ;
- ledit critère prédéterminé pour le regroupement des chemins supprimés en faisceaux de chemins est l'existence d'une distance entre les chemins adjacents d'un même groupe inférieure à une valeur seuil prédéterminée ;
- le procédé est appliqué à une séquence d'images successives et l'algorithme de redimensionnement par suppression de pixels comporte, pour la détermination des chemins à supprimer, la prise en compte d'une carte d'énergie formée d'une combinaison linéaire de la carte d'énergie de l'image courante avec la carte d'énergie de l'image précédente avec un coefficient de pondération appliqué à la carte d'énergie de l'image précédente.

L'invention a également pour objet :
un procédé de transmission d'image entre une entité émettrice et une entité réceptrice, selon la revendication 11.

L'invention sera mieux comprise à la lecture de la description qui va suivre, donnée uniquement à titre d'exemple et faite en se référant aux dessins, sur lesquels :

- la figure 1 est une vue d'ensemble du procédé de transmission ;
- la figure 2 est un organigramme général de l'algorithme mis en oeuvre par l'entité émettrice ;
- la figure 3 est un organigramme détaillé d'une étape de suppression des lignes de l'algorithme illustré sur la figure 2 ;
- la figure 4 est un organigramme de la modélisation des lignes supprimées sous forme de faisceaux de chemins supprimés ;
- la figure 5 est un organigramme du regroupement des chemins supprimés ;
- la figure 6 est organigramme détaillé de l'étape d'insertion des lignes supprimées mis en oeuvre par l'entité réceptrice ;
- la figure 7 est un exemple d'image réduite ;
- la figure 8 est la carte d'énergie de l'image réduite de la figure 7 ;
- la figure 9 est la carte d'énergie cumulative modifiée de l'image de la figure 8 pour tenir compte de la description des faisceaux.

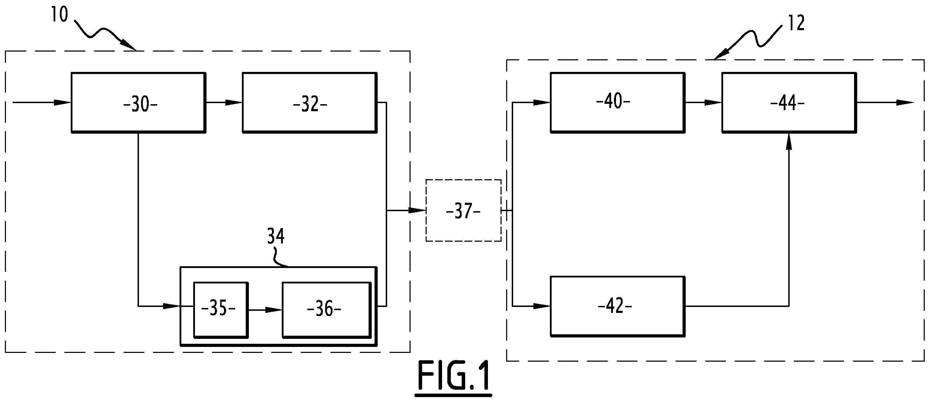

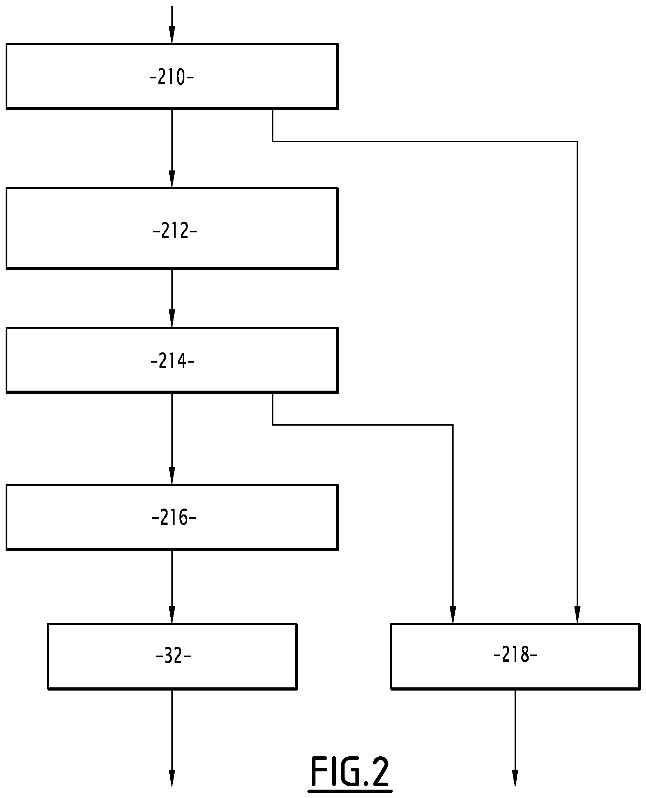

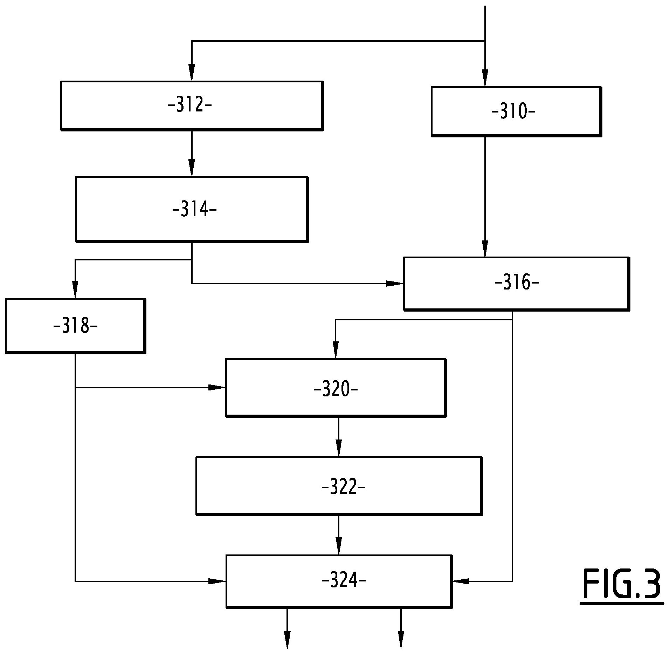

Sur la figure 1 est illustré un procédé de transmission d'images, par exemple des images vidéo, entre une entité émettrice 10 et une entité réceptrice 12.
L'entité émettrice dispose d'un flux d'images initiales successives formant la vidéo et assure sur chaque image initiale, à l'étape 30, une réduction de la taille de l'image par suppression de chemins s'étendant entre deux bords opposés de l'image, ces bords étant verticaux ou horizontaux. L'image obtenue est une image qualifiée de réduite. L'algorithme mis en oeuvre, lors de l'étape 30, est un algorithme de « seam carving » en anglais ou « redimensionnement par suppression de pixels » en français dont un exemple sera donné dans la suite.
A l'issue de cette étape 30, l'image réduite est compressée par toute méthode de compression adaptée à l'étape 32 par exemple par un codeur au standard H.264/AVC.
A l'étape 34, les chemins supprimés dans l'image lors de l'étape 32 sont modélisés par mise en oeuvre d'une étape 35 de regroupement des chemins supprimés en fonction d'un critère prédéterminé pour former des faisceaux de chemins et par création et codage lors d'une étape 36 d'une description des faisceaux des chemins supprimés.
L'image réduite compressée et la description des faisceaux des chemins supprimés sont transmises à l'étape 37 de l'entité émettrice 10 à l'entité réceptrice 12 notamment suivant une liaison à débit contraint.
Après réception, l'entité réceptrice 12 assure le décodage et la décompression de l'image réduite à l'étape 40 selon le standard H.264/AVC et le décodage de la description des faisceaux à l'étape 42.
Enfin, une image étendue est formée, à l'étape 44, en insérant des chemins dans l'image réduite par application d'un algorithme de « seam carving » en respectant la description transmise des faisceaux imposant certaines contraintes sur les chemins insérés.
L'étape 30 de réduction de la taille de chaque image initiale est détaillée sur la figure 2.
Préalablement, la vidéo est découpée en groupe d'images (l'image étant composée d'un groupe de pixels) désigné par GOP de longueur prédéfinie ou avec une longueur qui est définie en fonction du nombre de chemins pouvant être supprimés dans chaque image.
A l'étape 210, une réduction par « seam carving » est effectuée sur l'image d'abord horizontalement selon un algorithme qui sera décrit en détail en regard de la figure 3. Des chemins sont alors supprimés d'un bord latéral à l'autre bord latéral de l'image.
Il en résulte une image réduite verticalement et une liste des caractéristiques complètes des chemins horizontaux supprimés.

L'image est ensuite tournée de 90°, à l'étape 212, et une nouvelle étape 214 de réduction de l'image par « seam carving » est effectuée toujours horizontalement selon l'algorithme de la figure 3. Des chemins verticaux, du point de vue de l'image issue de l'étape 210 sont alors supprimés entre le bord supérieur et le bord inférieur de l'image.

Il en résulte une image réduite horizontalement et verticalement et une liste des caractéristiques complètes des chemins verticaux supprimés.

L'image subit une rotation de 90° en sens inverse à l'étape 216 avant d'être compressée et encodée à l'étape 32 avec les autres images réduite de la vidéo.

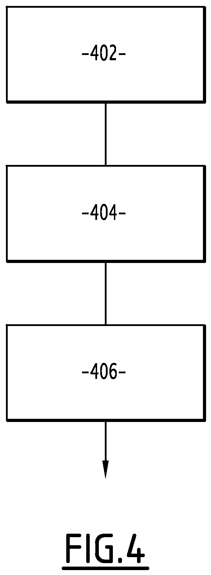

A partir des caractéristiques de chemins horizontaux et verticaux supprimés, une modélisation des chemins supprimés est effectuée à l'étape 218 par regroupement des chemins supprimés en faisceaux suivant au moins un critère prédéterminé et création d'une description des faisceaux. L'algorithme de modélisation de l'étape 218 correspondant à l'étape 34 de la figure 1 sera décrit en regard de la figure 4.

Lors des étapes 210 et 214, les chemins sont supprimés en un nombre tel que l'image réduite puisse être découpée en macro blocs complets de dimension 16x16 pour optimiser le contenu de l'image en utilisant une compression au standard H264/AVC.

La figure 3 illustre avec plus de détails l'étape 210 ou 214 de réduction d'une image.

La réduction de l'image s'effectue de manière itérative, à raison d'un chemin à chaque itération.

A chaque itération, un chemin est choisi et supprimé. Il est choisi pour préserver au mieux la sémantique du contenu comme décrit dans Avidan et Shamir (Avidan, S. and Shamir, A., "Seam Carving for Content-Aware Image Resizing", ACM Transactions Graphics, vol. 26, no.10, (2007)).

Un chemin est un chemin optimal de pixels de connexité 8 traversant l'image de haut en bas ou de gauche à droite. La connexité 8 signifie que suivant la longueur du chemin, le pixel suivant peut être choisi parmi les 8 pixels entourant le pixel d'origine. En pratique, seuls trois pixels peuvent être choisis.

De la même manière que la suppression d'une ligne ou d'une colonne de l'image, la suppression d'un chemin de l'image n'a seulement qu'un effet local.

Le coût d'un chemin, ou la suppression d'un chemin dans l'image en terme de perte de contenu est défini par une fonction d'énergie et une fonction d'énergie cumulative. Le chemin supprimé est choisi comme étant celui qui présente le coût le plus faible parmi un ensemble de chemin candidats, c'est-à-dire l'énergie cumulative la plus faible.

La plupart des travaux se sont orientés vers ces deux fonctions afin d'améliorer le choix des chemins. Ainsi le contenu important de l'image est préservé.

Une carte d'énergie et une carte d'énergie cumulative sont ainsi crées pour chaque image.

Dans le mode de réalisation préféré, la carte d'énergie est une combinaison d'une carte de saillance et du gradient pris pour chaque point de l'image.

A l'étape 310, le gradient calculé sur la luminance est établi pour chaque point de l'image. Le gradient est calculé par exemple comme exposé dans Avidan et Shamir.

A l'étape 312, une carte de saillance est calculée. Elle est établie par exemple comme décrit dans le document Rahtu, E. and Heikkila, J.A., ("Simple and efficient saliency detector for background subtraction", IEEE 12th International Conférence on Computer Vision Workshops, ICCV Workshops, 1137 -1144 (2009)).

La carte de saillance a l'avantage d'être multi-échelles. Elle ne nécessite pas d'apprentissage, et est calculée dans l'espace des couleurs de l'image.

A l'étape 314, une fonction de pondération est appliquée à chaque carte de saillance pour prendre en compte l'aspect temporel dans le cas d'une séquence d'images.

Cette pondération consiste en une combinaison linéaire de la carte de saillance courante avec la carte de saillance précédente avec un coefficient de pondération, égal à 0,3 par exemple, appliqué à la carte de saillance précédente.

Pour limiter les effets de blocs liés à l'approche multi-échelles tout en préservant les parties importantes de l'image, chaque valeur de la carte de saillance pondérée établi à l'étape 314 est multipliée, à l'étape 316 par la valeur correspondante de la carte de gradient établie à l'étape 310 pour former la carte d'énergie. Une telle carte d'énergie combinant une carte de saillance et de l'amplitude du gradient est décrite dans Anh et al.

En variante, la carte d'énergie est établie seulement par le calcul du gradient calculé sur la composante luminance comme proposé par Avidan et Shamir.

En variante, la carte d'énergie est seulement une carte de saillance.

Suivant encore d'autres variantes, d'autres cartes de saillance avec ou sans prise en compte de l'aspect temporel sont utilisées. De telles cartes sont décrites par exemple dans :

Hwang, D.-S. and Chien, S.-Y., "Content-aware image resizing using perceptual seam carving with human attention model", IEEE International Conférence on Multimedia and Expo,(2008)

Chen, D.-Y. and Luo, Y.-S., "Content-Aware Video Seam Carving Based on Bag of Visual Cubes", Sixth International Conférence on Intelligent Information Hiding and Multimedia Signal Processing (IIH-MSP), (2010) Chen décrit une sélection de chemin selon 3 dimensions y compris la dimension temporelle.

Chiang, C.-K, Wang, S.-F, Chen, Y.-L. and Lai, S.-H,. "Fast JND-Based Video Carving With GPU Acceleration for Real-Time Video Retargeting", IEEE Transactions on Circuits and Systems for Video Technology, (2009)

Achanta, R. and Susstrunk, S. "Saliency détection for content-aware image resizing", 16th IEEE International Conférence on Image Processing (ICIP), (2009)

En variante la carte d'énergie utilise un autre critère permettant la prise en compte des régions d'intérêt.

A l'étape 318, afin de contrôler la quantité de chemins pouvant être supprimés, un seuil est appliqué sur la carte de saillance pour distinguer du fond les objets importants ou régions d'intérêt.

Une carte d'énergie cumulative est ensuite établie à l'étape 320 à partir d'une fonction d'énergie. Ces fonctions d'énergies cumulatives proviennent des algorithmes mis en oeuvre à l'étape 316 et sont utilisées pour définir le chemin d'énergie cumulative minimale.

Le chemin supprimé à chaque stade est celui parmi tous les chemins possibles ayant l'énergie cumulative la plus petite.

Dans le cas du chemin vertical, la première étape est de traverser l'image de haut en bas et de calculer l'énergie cumulative M pour toutes les combinaisons de chemins et pour chaque point (i,j).

Avantageusement, la carte d'énergie cumulative est établie en utilisant la « forward Energy » comme décrit dans Rubinstein et al.

L'avantage de cette fonction est qu'elle mesure la quantité d'énergie insérée due aux nouvelles frontières. Ces nouvelles frontières précédemment non adjacentes le deviennent lorsque l'on supprime un point du chemin.

En variante, la « backward energy » proposée par Avidan et Shamir est utilisée en tant qu'énergie cumulative pour trouver le chemin optimal. Le problème avec cette méthode est qu'elle ne prend pas en compte les conséquences de la suppression d'un chemin et peut créer des artéfacts.

Encore suivant une variante, une fonction d'énergie absolue comme proposée par Frankovich et Wong (Frankovich, M. and Wong, A. "Enhanced Seam Carving via Integration of Energy Gradient Functionals", IEEE Signal Processing Letters, (2011)) est utilisée comme énergie cumulative. C'est une combinaison de la forward energy et de l'énergie du gradient.

Dans Tanaka et al., Tanaka 2 et al., Tanaka 3 et al., l'énergie cumulative pour déterminer les chemins est modifiée en combinant la « forward energy » avec le coût d'encodage des chemins. Une telle démarche est mise en oeuvre également avantageusement dans l'invention pour le calcul des chemins.

Pour garder constantes et multiples de 16 les dimensions spatiales de l'image, le « seam carving » contrôlé par la carte binaire est appliqué sur chaque image. Un nombre de chemins pouvant être supprimés sur chaque image est ainsi obtenu. Pour préservation le contenu sémantiquement important de l'image, le critère de sélection retenu est le plus petit nombre de chemins supprimables défini dans l'étape précédente. Cette approche a deux avantages : Le premier est que l'on préserve l'intégrité des objets importants intouchés. Le second est que, comme les dimensions sont fixes et multiples de 16, nous n'avons pas besoin d'insérer des pixels supplémentaires et l'utilisation du codeur vidéo standard H264/AVC est améliorée.

A l'étape 322, un critère de sélection du nombre de chemins à supprimer est appliqué.

A l'étape 324, le nombre sélectionné de chemins est supprimé par itérations successives pour chaque image et les points des chemins supprimés sont mémorisés.

La description des faisceaux est établie à l'étape 218.

Pour ce faire, on définit des faisceaux de chemins et parmi ces faisceaux, on recherche des zones de forte densité des chemins dans les faisceaux. Ces zones sont appelées des zones clés.

Ainsi, certaines positions seulement de ces faisceaux de chemins sont mémorisées dans la description des faisceaux afin d'être transmises, ce qui permet d'éviter d'envoyer un surplus d'information.

L'algorithme de regroupement est illustré sur la figure 4.

L'ensemble des chemins supprimés mémorisés est vu comme un ensemble de points.

Un réarrangement des chemins supprimés, de sorte à ce que ceux-ci ne se croisent pas, est effectué à l'étape 402.

A cet effet, on considère l'ensemble P constitué de tous les pixels des chemins supprimés, et positionnés dans l'image d'origine (taille d'origine).

A partir de P, on construit un nouvel ensemble de chemins par balayage des pixels de l'image selon les deux dimensions, afin d'obtenir des chemins ordonnés qui ne se croisent pas.

Le pseudo-code correspondant est le suivant :

```
Boucle sur les lignes (orthogonales aux chemins) : ligne d'indice i
        Indice_chemin = 0 ;
        Boucle sur les colonnes (parallèles aux chemins) : colonne d'indice j
```

```
                        Si le pixel pij appartient à P
         pij est affecté au chemin d'indice Indice_chemin
         Indice_chemin = Indice_chemin + 1 ;
                              Fin
                 j=j+1 ; // pour la prochaine colonne
            Fin Boucle sur les colonnes
            i = i+1 ; // pour la prochaine ligne
      Fin Boucle sur les lignes
```

Un regroupement des chemins, à l'aide d'un critère de distance entre deux chemins, est effectué à l'étape 404.

De manière générale les chemins adjacents sont regroupés en faisceaux

Pour effectuer cela, la règle suivante est appliquée : si la distance du chemin précédent au chemin courant seuil T_Gpe, le chemin est inséré au faisceau courant. Sinon un nouveau faisceau est créé avec comme premier élément le chemin courant.

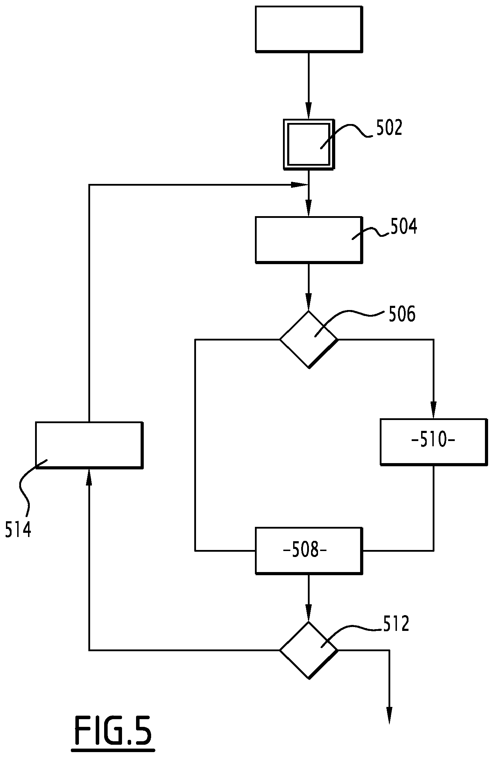

Plus précisément, et comme illustré sur la figure 5, on procède à l'étape 502 à une initialisation du nombre de faisceau, celui-ci étant pris à zéro. On considère comme chemin courant, le premier chemin à une extrémité de l'image.

A l'étape 504, la distance entre le chemin courant et le chemin suivant est calculée par toute distance adaptée.

La distance utilisée est par exemple une distance de Minkowski. Il s'agit par exemple des distances L1 ou L2. La distance L1 ou distance de Manhattan est définie comme la somme des valeurs absolues des différences de coordonnées entre les pixels de deux chemins pour chacune des lignes de l'image. La distance L2 est la distance Euclidienne, c'est-à-dire la somme des carrés des différences de coordonnées entre les pixels de deux chemins pour chacune des lignes de l'image. En variante, la distance est prise égale au maximum des valeurs absolues des différences de coordonnées entre deux pixels d'une même ligne des deux chemins successifs pour l'ensemble des lignes.

Si à l'étape 506, la distance est inférieure à un seuil, le chemin suivant est affecté au faisceau courant à l'étape 508. Sinon, un nouveau faisceau est créé lors de l'étape 210 et le chemin suivant est affecté au nouveau faisceau.

Les étapes 504 et suivantes sont mises en oeuvre tant qu'il reste des chemins supprimés à regrouper, à partir du test effectuer à l'étape 512, l'étape 514 consistant à remplacer le chemin courant par le chemin suivant et à considérer un nouveau chemin suivant.

Une description des faisceaux ordonnés de chemins supprimés ainsi obtenus est effectuée à l'étape 406 comme décrit en détail dans la suite.

Pour ce faire, on sélectionne des lignes de l'image et les faisceaux sont décrits à partir de la description des seules intersections de ces lignes sélectionnées avec les faisceaux. Ces intersections constituent des zones clé formées de groupes de pixels qui seront utilisées pour la reconstitution des lignes supprimées dans l'image étendue.

Pour la création de cette description, les notations suivantes sont utilisées.

On découpe l'image en zones selon la direction des chemins.

On note N le nombre de lignes et n l'indice d'une ligne, n = 1,...,N

On note K le nombre de zones et k l'indice d'une zone, k=1,...,K

On note P le nombre de faisceaux obtenus après la phase de regroupement à l'étape 404, et p l'indice d'un faisceau, p=1,...,P.

On définit la dispersion d'un faisceau p sur la ligne n comme la distance entre les pixels des premier et dernier chemins du faisceau p sur la ligne n, notée Dispersion_Faisceau (p, n).

La zone d'indice k et constituée des lignes comprises entre les indices n1(k) et n2(k) avec :

$$n1(k) = (k-1)*(N/K) + 1$$

$$n2(k) = k*(N/K)$$

Selon une première variante, on sélectionne une ligne par zone et par faisceau.

Ainsi, sur chaque zone, on choisit comme ligne sélectionnée, la ligne qui minimise la dispersion du faisceau. Cette démarche est faite pour chaque faisceau à partir du pseudo code suivant :

```
      Boucle sur les zones (indice k)
      {Boucle sur les faisceaux (indice p)
            {
                  Min_dispersion(p) = infini (valeur suffisamment grande)
            }
            On initialise la ligne sélectionnée (ns) par la première ligne de la zone k
```

```
ns(p,k) = n1(k)
Boucle sur les lignes de la zone d'indice k (indice n)
{
        Boucle sur les faisceaux d'indice p
        {
                si (Dispersion_Faisceau (p, n) < Min_dispersion (p))
                alors Min_dispersion(p) = Dispersion_Faisceau (p, n)
                        ns(p,k) = n
} } }
```

Suivant une deuxième variante, la sélection d'une ligne est faite par zone pour tous les faisceaux. Sur chaque zone, on choisit comme ligne sélectionnée, la ligne qui minimise la somme des dispersions de tous les faisceaux. Cette démarche est faite pour l'ensemble des faisceaux à partir du pseudo code suivant :.

```
Boucle sur les zones (indice k)
{
        Min_dispersion = infini (valeur suffisamment grande)
        On initialise la ligne sélectionnée par la première ligne de la zone k
        ns(k) = n1(k)
        Boucle sur les lignes de la zone d'indice k (indice n)
        {dispersion_cumulée = 0 ;
                Boucle sur les faisceaux d'indice p
                {dispersion_cumulée
                        = dispersion_cumulée + Dispersion_Faisceau (p, n)
                }
                Si (dispersion_cumulée < Min_dispersion)
                        Alors : Min_dispersion = Dimension_cumulée
                                ns(k) = n
}
```

Dans les deux exemples précédents le regroupement des chemins est effectué préalablement à la description des faisceaux. Dans un tel cas, le regroupement des chemins est un critère de distance entre les chemins, en considérant toute la longueur de chaque chemin, et non seulement la distance entre deux chemins prise suivant les lignes sélectionnées.

Suivant une troisième variante, le regroupement des chemins supprimés et la sélection des lignes sélectionnées sont réalisés conjointement.

Dans chaque zone, la ligne sélectionnée est celle qui contient l'intersection avec les faisceaux ayant le plus grand nombre de chemins supprimés.

Dans cette variante, le regroupement des pixels ou des chemins par ligne sélectionnée se fait de proche en proche par seuillage de la distance inter-pixel : tout pixel dont la distance au pixel précédent est inférieure à un seuil est affecté au groupe de pixels précédent, dans le cas contraire le pixel est affecté à un nouveau groupe.

Chaque zone est balayée ligne à ligne et la ligne sélectionnée est choisie comme la ligne ayant le plus large groupe, c'est-à-dire l'intersection la plus grande entre la ligne et un faisceau ayant le plus de pixels. Ce choix traduit l'idée que les chemins doivent éviter les objets importants de l'image et se retrouvent concentrés en des zones clés. Les zones clés importantes sont ainsi détectées.

Cette démarche est assurée pour une zone par mise en oeuvre du pseudo code suivant :
On définit N(k) le nombre de lignes dans la zone d'indice k.
Boucle sur les lignes de la zone d'indice k (indice n)

```
{
    Regroupement des chemins pour la ligne n
    on obtient G(n) le nombre de groupes sur la ligne n
    et P(n,g) égale au nombre de pixels sur la ligne n du groupe d'indice g
    Pour chaque ligne, on sélectionne le groupe ayant le plus grand nombre de pixels.
Le groupe sélectionné est donné par gs(n) = ArgMax { P(n,g) } pour g=1,.., G(n)
    On sélectionne la ligne dans la zone k qui maximise gs(n)
    Finalement l'indice de la ligne sélectionnée est donné par :
        ns(k) = ArgMax { gs(n) } pour n= 1,.., N(k)
}
```

**EP 2 737 452 B1**

Dans chacune des variantes décrites ci-dessus, les zones sont composées d'un ensemble de lignes successives, et peuvent être réparties dans l'image de plusieurs façons. Une première méthode consiste à découper l'image en zones uniformément réparties. Une deuxième méthode consiste à définir les zones comme un ensemble de lignes autour de lignes équi réparties dans l'image. Enfin, une troisième méthode consiste à découper l'image en zones réparties tenant compte par exemple de la nature de l'image er de son contenu. Ces méthodes ne sont données qu'à titre d'illustration.

Enregistrer la position de la ligne sélectionnée ainsi que la position de tous les chemins sur cette ligne est possible mais il n'est pas judicieux de ne garder que la position du groupe de chemins car la réinsertion des chemins manquants risquerait de déplacer et déformer l'image sur ces lignes sélectionnées.

Dans l'exemple décrit précédemment, le regroupement des chemins, ainsi que la description des faisceaux, c'est-à-dire la description des regroupements effectuée suivant les lignes sélectionnées, s'effectuent simultanément.

Pour la description des faisceaux, l'un des modes de description suivants peut être utilisé.

Ainsi, comme exposé précédemment, il est possible de transmettre, pour chaque ligne sélectionnée, la position de tous les chemins de chaque faisceau suivant ces lignes sélectionnées.

En variante, seule la position du premier et du dernier chemins de chaque faisceau pour chaque ligne sélectionnée est transmise, ainsi que le nombre de chemins entre les chemins extrêmes.

En variante, seule la position moyenne de chaque faisceau, correspondant à la moyenne des positions de chemins constituant le faisceau sur chaque ligne sélectionnée est transmise, ainsi que le nombre de chemins du faisceau et éventuellement un écart-type caractérisant les chemins du faisceau.

Enfin, suivant encore une autre variante, seule la position du premier chemin de chaque faisceau pour chaque ligne sélectionnée est transmise, ainsi que le nombre de chemins de chaque faisceau pour chaque ligne sélectionnée.

Après avoir identifié les groupes ou faisceau de chemins et notamment leur position sur les lignes sélectionnées une compression des groupes de chemins est également effectuée lors de l'étape 406.

Pour encoder la position et limiter le coût d'encodage, pour chaque image réduite, les quantités suivantes sont encodées :

- Le nombre de lignes verticales et horizontales scannées pour la synthèse
- Le nombre de chemins horizontaux et verticaux supprimés

Pour chaque image du Gop et pour chaque direction, les quantités suivantes sont encodées :

- Le nombre maximal de groupes de chemins
- Le nombre maximal de chemins dans un groupe

Pour chaque ligne verticale, les quantités suivantes sont encodées :

- La coordonnée de la ligne. Pour la première ligne, Coordinate_Previous_Line =0, pour les autres lignes, Coordinate_Previous_Line est la position de la ligne précédente.
- Le nombre de groupes sur la ligne.

Pour chaque groupe de la ligne, les quantités suivantes sont encodées :

- Les coordonnées du point le plus à droite. Pour le premier point Coordinate_Previous_Group=0 et pour les autres points, Coordinate_Previous_Group est la coordonnée du point le plus à droite du groupe précédent.
- Le nombre de chemins dans le groupe. Pour le premier point, Nb_seams_Inserted=0 et pour les autres points, Nb_seams_Inserted est le nombre de seams insérés dans la ligne.

Ces quantités constituent la description des faisceaux qui est transmise en plus de l'image réduite à l'étape 37.

Après réception et décompression de l'image réduite à l'étape 40 et décodage de la description des faisceaux, à l'étape 42, l'étape 44 de synthèse de chemins dans l'image réduite pour produire l'image étendue est mise en oeuvre.

De manière générale, la carte d'énergie de l'image réduite en cours de traitement est modifiée en fonction de la description des faisceaux pour obliger les chemins insérés à passer par les zones clés définis dans la phase précédente. Cette approche permet d'éviter que les chemins ne passent à travers les objets importants et permet aux objets importants de retrouver leur position initiale.

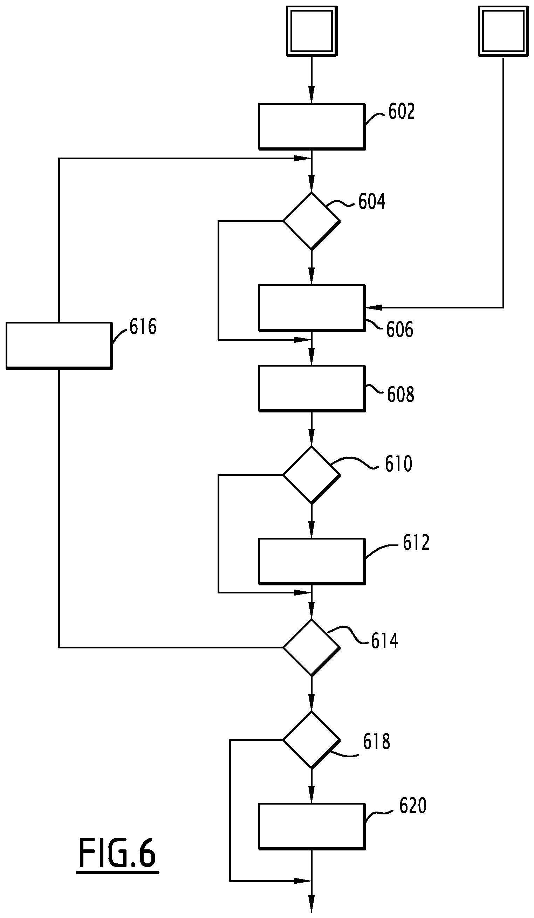

Plus précisément et comme illustré sur la figure 6, après réception des données transmises, l'image réduite est décompressée pour obtenir une image décompressée 600. De même, une description des faisceaux 601 est obtenue par décompression des données reçues.

Une carte d'énergie est calculée pour l'image réduite décompressée à l'étape 602. A cet effet, le même mode de calcul de la carte d'énergie que celui utilisé pour la suppression des chemins est mis en oeuvre. En l'espèce, il s'agit d'une combinaison des cartes de saillance et de la carte de gradient.

Un test est effectué à l'étape 604 pour déterminer si la dimension actuelle de l'image en cours de traitement est inférieure à la dimension d'origine de l'image. Si tel est le cas, la carte d'énergie précédemment produite est pondérée pour modifier la valeur d'énergie sur les lignes sélectionnées obtenues de la description des faisceaux 601. Cette pondération consiste à ajouter une valeur maximale sur tous les pixels de chaque ligne sélectionnée sauf au pixel de la zone clé de passage souhaité pour la future ligne insérée. La valeur maximale ajoutée est choisie supérieure à toutes les valeurs de l'image.

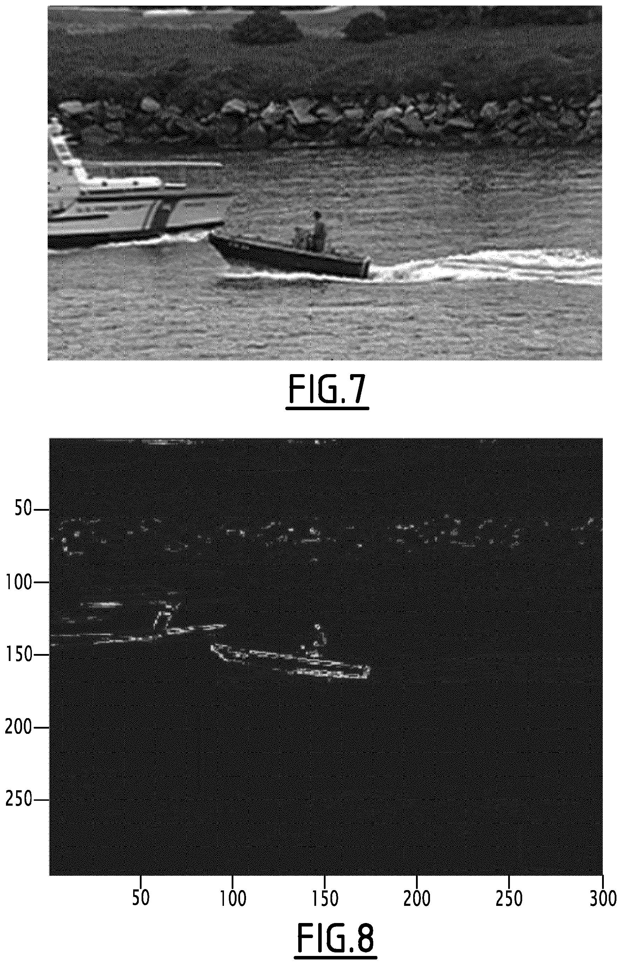

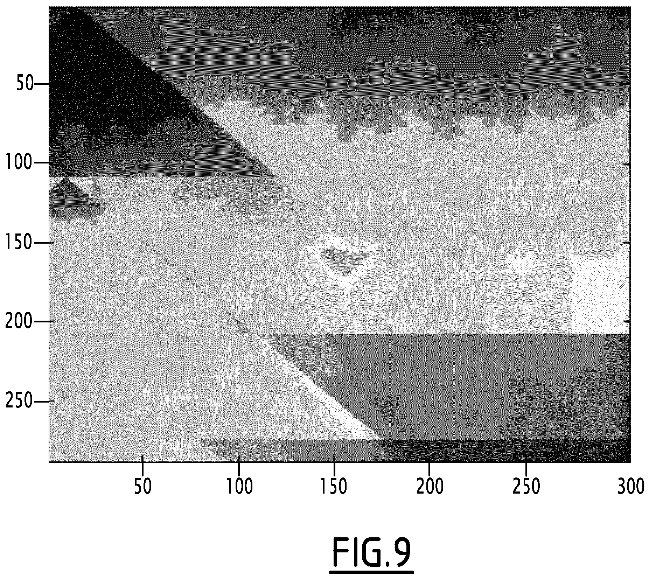

Cette modification est illustrée sur la figure 9 correspondant aux images des figures 7 et 8.

Si à l'étape 604, la dimension de l'image en court de traitement est supérieure à la dimension d'origine de l'image, l'étape 608 est directement appliquée. Cette étape 608 consiste à déterminer le chemin à insérer. Ce chemin est déterminé comme le chemin minimisant l'énergie cumulative parmi un ensemble de chemins candidats comme connu en soi dans une méthode de « seam carving ».

A l'étape 610, il est déterminé si les valeurs des pixels du chemin inséré doivent être ou non renseignées immédiatement. Si tel est le cas, ces valeurs sont déterminées, à l'étape 612, par une méthode de propagation connue en soi, c'est-à-dire par la reprise des valeurs associées à l'un des pixels immédiatement adjacents, ou par une méthode d'interpolation à partir des valeurs des pixels adjacents.

A l'étape 614, il est déterminé si la dimension de l'image en court de traitement correspond à la dimension cible pour l'image. Si tel n'est pas le cas, une nouvelle carte d'énergie pour l'image en cours de reconstitution est déterminée à l'étape 616, par la même méthode de calcul que celle mise en oeuvre à l'étape 602, et les étapes 604 et suivantes sont à nouveau mises en oeuvre.

Si la dimension de l'image correspond à la dimension cible, il est déterminé à l'étape 618 si des valeurs pour chaque pixel ont été affectées aux chemins insérés à l'étape 612.

Si tel n'est pas le cas, l'étape 620 d'affectation de valeurs aux pixels insérés est mise en oeuvre. Cette affectation globale de valeurs est effectuée par toutes méthodes connues adaptées, notamment une méthode de type « inpainting », une synthèse de texture à partir de la reprise d'une texture prélevée dans l'image, ou encore une méthode d'interpolation.

L'image numérique réduite est ainsi décodée à l'issue de cet algorithme pour obtenir une image reconstituée.

## Revendications

**1.** Procédé de codage d'une image numérique ou d'une séquence d'images numériques comportant une étape de :

a. suppression (30) de chemins entre deux bords opposés d'une image par un algorithme de redimensionnement par suppression de pixels pour définir une image réduite ;
b. modélisation (34) des chemins supprimés pour transmission avec l'image réduite en vue de l'interpolation d'une image étendue,
**caractérisé en ce que**
l'étape de modélisation (34) des chemins supprimés comporte :

b1/ le regroupement (35) des chemins supprimés en faisceaux de chemins suivant au moins un critère prédéterminé ;
b2/ la création (36) d'une description des faisceaux de chemins supprimés,

le procédé étant appliqué à une séquence d'images successives et l'algorithme de redimensionnement par suppression de pixels comporte, pour la détermination des chemins à supprimer, la prise en compte d'une carte d'énergie formée d'une combinaison linéaire de la carte d'énergie de l'image courante avec la carte d'énergie de l'image précédente avec un coefficient de pondération appliqué à la carte d'énergie de l'image précédente.

**2.** Procédé de codage selon la revendication 1, **caractérisé en ce que** ladite description des faisceaux comporte, pour seulement certaines lignes sélectionnées de l'image, une information sur la répartition des chemins supprimés.

**3.** Procédé de codage selon la revendication 2, **caractérisé en ce que** l'information sur la répartition des chemins supprimés comporte la position de passage des chemins supprimés sur les lignes sélectionnées.

**4.** Procédé de codage selon la revendication 2 ou 3, **caractérisé en ce que** les lignes sélectionnées sont prises au moins chacune dans des zones équi-réparties de l'image selon la direction des chemins supprimés.

**5.** Procédé de codage selon la revendication 2 ou 3, **caractérisé en ce que** les lignes sélectionnées sont prises au moins chacune dans des zones réparties définies dans l'image en fonction du contenu de l'image.

**6.** Procédé de codage selon l'une quelconque des revendications 2 à 5, caractérisé en ce, pour une zone donnée comportant plusieurs lignes successives, une ligne sélectionnée est choisie pour chaque faisceau comme étant celle pour laquelle le faisceau présente la dispersion minimale.

**7.** Procédé de codage selon l'une quelconque des revendications 2 à 5, **caractérisé en ce que**, pour une zone donnée comportant plusieurs lignes successives, une même ligne sélectionnée est choisie pour tous les faisceaux comme étant celle pour laquelle la somme des dispersions des faisceaux est minimale.

**8.** Procédé de codage selon l'une quelconque des revendications 2 à 5, **caractérisé en ce que**, pour une zone donnée comportant plusieurs lignes successives, une même ligne sélectionnée est choisie pour tous les chemins comme étant celle comportant le plus grand nombre de chemins séparés les uns des autres de proche en proche d'une distance inférieure à un seuil prédéfini.

**9.** Procédé de codage selon l'une quelconque des revendications 2 à 8, **caractérisé en ce que** la création (36) d'une description des faisceaux de chemins supprimés consiste en la définition de l'une des descriptions suivantes :

- la position de tous les chemins de chaque faisceau pour chaque ligne sélectionnée,
- la position du premier et du dernier chemin de chaque faisceau pour chaque ligne sélectionnée, ainsi que le nombre de chemins du faisceau,
- la position moyenne de chaque faisceau, correspondant à la moyenne des positions des chemins constituant le faisceau sur chaque ligne sélectionnée, ainsi que le nombre de chemins du faisceau, ou
- la position du premier chemin de chaque faisceau pour chaque ligne sélectionnée ainsi que le nombre de chemins de chaque faisceau pour chaque ligne sélectionnée.

**10.** Procédé de codage selon l'une quelconque des revendications précédentes, **caractérisé en ce que** ledit critère prédéterminé pour le regroupement (35) des chemins supprimés en faisceaux de chemins est l'existence d'une distance entre les chemins adjacents d'un même groupe inférieure à une valeur seuil prédéterminée.

**11.** Procédé de transmission d'image entre une entité émettrice (10) et une entité réceptrice (12), **caractérisé en ce que** l'entité émettrice (10) met en oeuvre un procédé de codage d'une image numérique initiale selon l'une quelconque des revendications 1 à 10 ;
l'entité émettrice (10) transmet à l'entité réceptrice (12), l'image réduite et une modélisation des chemins supprimés sous forme d'une description de faisceaux de chemins supprimés,
l'entité réceptrice (12) met en oeuvre un procédé de décodage de l'image réduite reçue en tenant compte de la modélisation des chemins supprimés sous forme d'une description en faisceaux de chemins supprimés, le procédé de décodage comportant
l'insertion dans ladite image réduite de lignes entre deux bords suivant un algorithme tenant compte de la description des chemins supprimés dans l'image initiale, l'étape d'insertion dans ladite image réduite de lignes étant effectuée en respectant la description des faisceaux de chemins supprimés.

**Patentansprüche**

**1.** Verfahren zum Kodieren eines digitalen Bildes oder einer Folge von digitalen Bildern, aufweisend den Schritt des:

a. Entfernens (30) von Pfaden zwischen zwei gegenüberliegenden Rändern eines Bildes durch einen Algorithmus zur Größenänderung durch Pixelunterdrückung, um ein reduziertes Bild zu definieren;
b. Modellierens (34) von gelöschten Pfaden zur Übertragung mit dem reduzierten Bild zur Interpolation eines erweiterten Bildes,
**dadurch gekennzeichnet, dass**
der Schritt des Modellierens (34) der gelöschten Pfade aufweist:

b1 / das Umgruppieren (35) von gelöschten Pfaden in Pfadbündeln gemäß mindestens einem vorbestimmten Kriterium;
b2 / das Erstellen (36) einer Beschreibung der Bündel von gelöschten Pfaden,

wobei das Verfahren auf eine Folge von aufeinanderfolgenden Bildern angewendet wird und der Algorithmus zur Größenänderung durch Pixelunterdrückung aufweist, zur Ermittlung der zu löschenden Pfade, die Berücksichtigung einer Energiekarte, die aus einer linearen Kombination der Energiekarte des aktuellen Bildes mit der Energiekarte des vorhergehenden Bildes mit einem Gewichtungskoeffizienten, der auf die Energiekarte des vorherigen Bildes angewendet wird, gebildet wird.

2. Kodierverfahren nach Anspruch 1, **dadurch gekennzeichnet, dass** die Beschreibung der Bündel nur für ausgewählte Zeilen des Bildes eine Information über die Verteilung von gelöschten Pfaden aufweist.

3. Kodierverfahren nach Anspruch 2, **dadurch gekennzeichnet, dass** die Information über die Verteilung der gelöschten Pfade die Position des Verlaufs der gelöschten Pfade auf den ausgewählten Zeilen enthält.

4. Kodierverfahren nach Anspruch 2 oder 3, **dadurch gekennzeichnet, dass** die ausgewählten Zeilen mindestens jeweils in gleichverteilten Bereichen des Bildes gemäß der Richtung der gelöschten Pfade genommen werden.

5. Kodierverfahren nach Anspruch 2 oder 3, **dadurch gekennzeichnet, dass** die ausgewählten Zeilen mindestens jeweils in verteilten Bereichen genommen werden, die in dem Bild in Abhängigkeit des Inhalts des Bildes definiert sind.

6. Kodierverfahren nach einem der Ansprüche 2 bis 5, **dadurch gekennzeichnet, dass** für einen gegebenen Bereich mit mehreren aufeinanderfolgenden Zeilen eine ausgewählte Zeile für jedes Bündel als diejenige ausgewählt wird, für die das Bündel die minimale Dispersion aufweist.

7. Kodierverfahren nach einem der Ansprüche 2 bis 5, **dadurch gekennzeichnet, dass** für einen gegebenen Bereich, der mehrere aufeinanderfolgende Zeilen aufweist, die gleiche ausgewählte Zeile für alle Bündel als diejenige gewählt wird, für die die Summe der Dispersionen der Bündel minimal ist.

8. Kodierverfahren nach einem der Ansprüche 2 bis 5, **dadurch gekennzeichnet, dass** für einen gegebenen Bereich, der mehrere aufeinanderfolgende Zeilen aufweist, dieselbe ausgewählte Zeile für alle Pfade als diejenige ausgewählt wird, die die größte Anzahl von Pfaden aufweist, die voneinander schrittweise um einen Abstand getrennt sind, der unter einem vordefinierten Schwellenwert liegt.

9. Kodierverfahren nach einem der Ansprüche 2 bis 8, **dadurch gekennzeichnet, dass** das Erzeugen (36) einer Beschreibung der Bündel von gelöschten Pfaden in der Definition einer der folgenden Beschreibungen besteht:

   - der Position aller Pfade jedes Bündels für jede ausgewählte Zeile,
   - der Position des ersten und des letzten Pfads jedes Bündels für jede ausgewählte Zeile sowie der Anzahl der Pfade des Bündels,
   - der durchschnittlichen Position jedes Bündels, die dem Durchschnitt der Positionen der das Bündel bildenden Pfade auf jeder ausgewählten Zeile entspricht, sowie der Anzahl der Pfade des Bündels oder
   - der Position des ersten Pfads jedes Bündels für jede ausgewählte Zeile sowie die Anzahl der Pfade jedes Bündels für jede ausgewählte Zeile.

10. Kodierverfahren nach einem der vorhergehenden Ansprüche dadurch charakterisiert, dass das vorbestimmte Kriterium zum Umgruppieren (35) von gelöschten Pfaden in Bündel das Vorhandensein eines Abstands zwischen den benachbarten Pfaden derselben Gruppe unter einem vorgegebenen Schwellenwert ist.

11. Verfahren zur Übertragung eines Bilds zwischen einer sendenden Entität (10) und einer empfangenden Entität (12), **dadurch gekennzeichnet, dass**
    die sendende Entität (10) ein Verfahren zum Kodieren eines digitalen Anfangsbilds nach einem der Ansprüche 1 bis 10 implementiert;
    die sendende Entität (10) an die empfangende Entität (12) das reduzierte Bild und eine Modellierung der gelöschten Pfade in Form einer Beschreibung von Bündeln gelöschter Pfade überträgt,
    die empfangende Entität (12) ein Verfahren zum Dekodieren des empfangenen reduzierten Bilds unter Berücksichtigung der Modellierung der gelöschten Pfade in Form einer Beschreibung in Bündeln gelöschter Pfade ausführt,
    wobei das Verfahren zum Dekodieren aufweist
    das Einfügen in dem reduzierten Bild von Zeilen zwischen den beiden Rändern folgend einem Algorithmus unter Berücksichtigung der Beschreibung der gelöschten Pfade in dem Anfangsbild, wobei der Schritt des Einfügens in dem reduzierten Bild von Zeilen unter Beachtung der Beschreibung der Bündel von gelöschten Pfaden durchgeführt wird.

**Claims**

1. A method for encoding a digital image or a sequence of digital images including the steps of:

   a. deleting (30) paths between two opposite edges of an image using an algorithm for resizing by deleting pixels, in order to define a reduced image; and
   b. modeling (34) the deleted paths for transmission with the reduced image, with a view to interpolating an expanded image,
   **characterized in that**
   the step (34) for modeling the deleted paths includes:

   b1/ grouping (35) the deleted paths and bundles of paths according to at least one predetermined criterion;
   b2/ generating (36) a description of the bundles of deleted paths,

   the method being applied to a sequence of successive images and the algorithm for resizing by deleting pixels includes, for the determination of the paths to be deleted, taking into account an energy map formed by a linear combination of the energy map of the current image with the energy map of the previous image with a weight coefficient applied to the energy map of the previous image.

2. The encoding method according to claim 1, **characterized in that** said description of the bundles includes, for only certain selected lines of the image, information on the distribution of the deleted paths.

3. The encoding method according to claim 2, **characterized in that** the information on the distribution of the deleted paths includes the passage position of the deleted paths over the selected lines.

4. The encoding method according to claim 2 or 3, **characterized in that** the selected lines are taken at least each in evenly distributed areas of the image according to the direction of the deleted paths.

5. The encoding method according to claim 2 or 3, **characterized in that** the selected lines are taken at least each in distributed areas defined in the image as a function of the content of the image.

6. The encoding method according to any one of claims 2 to 5, **characterized in that** for a given area including several successive lines, a selected line is chosen for each bundle as that for which the bundle has the minimal dispersion.

7. The encoding method according to any one of claims 2 to 5, **characterized in that**, for a given area including several successive lines, a same selected line is chosen for all of the bundles as being that for which the sum of the dispersions of the bundles is minimal.

8. The encoding method according to any one of claims 2 to 5, **characterized in that**, for a given area including several successive lines, a same selected line is chosen for all of the paths as being that including the largest number of paths separated from each other little by little by a distance below a predetermined threshold.

9. The encoding method according to any one of claims 2 to 8, **characterized in that** the generation (36) of a description of the bundles of deleted paths consists of defining one of the following descriptions:

   - the position of all of the paths of each bundle for each selected line,
   - the position of the first and last paths of each bundle for each selected line, as well as the number of paths of the bundle,
   - the average position of each bundle, corresponding to the average of the positions of the paths making up the bundle on each selected line, as well as the number of paths of the bundle, or
   - the position of the first path of each bundle for each selected line as well as the number of paths of each bundle for each selected line.

10. The encoding method according to any one of the preceding claims, **characterized in that** said predetermined criterion for grouping (35) the deleted paths in the bundles of paths is the existence of the distance between the adjacent paths of the same group below a predetermined threshold value.

11. A method for transmitting an image between a sending entity (10) and a receiving entity (12), **characterized in that** the sending entity (10) carries out a method for encoding an initial digital image according to any one of claims 1 to 10; the sending entity (10) sends the receiving entity (12) the reduced image and a model of the deleted paths in the form of a description of bundles of deleted paths; the receiving entity (12) carries out a method for decoding the received reduced image taking into account the modeling of the deleted paths in the form of a description of bundles of deleted paths, the method comprising inserting lines in said reduced image between two edges according to an algorithm taking the description of the paths deleted in the initial image into account, the step of inserting lines in said reduced image being carried out in compliance with the description of the bundles of deleted paths.

FIG.1

FIG.2

FIG.3

```
┌─────────────────────┐
│                     │
│       -402-         │
│                     │
└─────────────────────┘
           │
           │
┌─────────────────────┐
│                     │
│       -404-         │
│                     │
└─────────────────────┘
           │
           │
┌─────────────────────┐
│                     │
│       -406-         │
│                     │
└─────────────────────┘
           │
           ▼
```

# FIG.4

EP 2 737 452 B1

FIG.5

20

FIG.6

## FIG.7

## FIG.8

## FIG.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2219153 A

**Littérature non-brevet citée dans la description**

- **ANH, N. ; YANG, W. ; CAI, J.** Seam carving extension: a compression perspective. *Proc. of the 17th ACM int. conf. on Multimedia,* 2009
- Image coding using concentration and dilution based on seam carving with hierarchical search. **TANAKA, Y. ; HASEGAWA, M. ; KATO, S.** Proc. IEEE Int. Conf. Acoustics Speech and Signal Processing, 2010
- **WANG, T. ; URAHAMA, K.** Cartesian resizing of image and video for data compression. *TENCON 2010 - 2010 IEEE Region 10 Conference,* 2010, 1651-1656
- **TANAKA, Y. ; HASEGAWA, M. ; KATO, S.** Image concentration and dilution for video coding. *IIEEJ Image Electronics and Visual Computing Workshop - IEVC2010,* 2010
- **RUBINSTEIN, M. ; SHAMIR, A. ; AVIDAN, S.** Improved seam carving for video retargeting. *ACM Transactions on Graphics,* 2008
- Seam carving with rate-dependent seam path information. **TANAKA, Y. ; HASEGAWA, M. ; KATO, S.** Proc. of the IEEE Int. Conf. Acoustics Speech and Signal Processing (ICASSP), 2011
- **AVIDAN, S. ; SHAMIR, A.** Seam Carving for Content-Aware Image Resizing. *ACM Transactions Graphics,* 2007, vol. 26 (10

- **RAHTU, E. ; HEIKKILA, J.A.** Simple and efficient saliency detector for background subtraction. *IEEE 12th International Conférence on Computer Vision Workshops, ICCV Workshops,* 2009, 1137-1144
- **HWANG, D.-S. ; CHIEN, S.-Y.** Content-aware image resizing using perceptual seam carving with human attention model. *IEEE International Conférence on Multimedia and Expo,* 2008
- **CHEN, D.-Y. ; LUO, Y.-S.** Content-Aware Video Seam Carving Based on Bag of Visual Cubes. *Sixth International Conférence on Intelligent Information Hiding and Multimedia Signal Processing (IIH-MSP),* 2010
- **CHIANG, C.-K ; WANG, S.-F ; CHEN, Y.-L. ; LAI, S.-H.** Fast JND-Based Video Carving With GPU Acceleration for Real-Time Video Retargeting. *IEEE Transactions on Circuits and Systems for Video Technology,* 2009
- **ACHANTA, R. ; SUSSTRUNK, S.** Saliency détection for content-aware image resizing. *IEEE International Conférence on Image Processing (ICIP),* 2009
- **FRANKOVICH, M. ; WONG, A.** Enhanced Seam Carving via Integration of Energy Gradient Functionals. *IEEE Signal Processing Letters,* 2011